# EUROPEAN PATENT APPLICATION

(11) **EP 1 170 918 A1**
(43) Date of publication of application: **09.01.2002**
(21) Application number: 01113813.8
(22) Date of filing: 06.06.2001
(51) Int. Cl.: H04L 27/26

(54) **Method and apparatus for generating orthogonal frequency division multiplexed (OFDM) signal**

(30) Priority: 22.06.2000 JP 2000187362
(71) Applicant: Victor Company of Japan, Ltd., Yokohama 221-0022 (JP)
(72) Inventor: Matsui, Kazunari, Miura-shi, Kanagawa-ken (JP)
(74) Representative: Manitz, Finsterwald & Partner GbR

(57) **Abstract**

Every segment of an input information signal is assigned to one of first signal points in a complex plane in response to a state of the segment. First signal-point information is generated which represents the assignment of the segment to one of the first signal points. Second signal-point information is generated in response to the first signal-point information. The first signal-point information and the second signal-point information are symmetrical with respect to a predetermined frequency having a relation of a predetermined integer ratio with an IDFT sampling frequency to cancel and nullify one of a real-part IDFT-resultant signal and an imaginary-part IDFT-resultant signal. IDFT is implemented in response to the first signal-point information and the second signal-point information to generate an IDFT-resultant OFDM signal having only one of a real-part component and an imaginary-part component.

## Description

### Field of the Invention

This invention relates to a method of generating an orthogonal frequency division multiplexed signal (an OFDM signal). In addition, this invention relates to an apparatus for generating an OFDM signal.

### Description of the Related Art

Orthogonal frequency division multiplexing (OFDM) employs multiple carriers which are orthogonal with respect to each other. The "orthogonal" multiple carriers mean that the spectrums of carriers neighboring one carrier are null at the frequency of the latter carrier. The multiple carriers are modulated in accordance with digital information pieces to be transmitted, respectively. The modulation-resultant multiple carriers are combined into an OFDM signal which has a form as a random signal. Since the multiple carriers are orthogonal, they do not interfere with each other. Accordingly, during transmission, the digital information pieces assigned to the respective multiple carriers are prevented from interfering with each other.

A typical apparatus for generating an OFDM signal has an IFFT (inverse fast Fourier transform) stage and a quadrature modulation stage. The IFFT stage generates a pair of baseband OFDM signals. The quadrature modulation stage follows the IFFT stage. The quadrature modulation stage up-converts and multiplexes the baseband OFDM signals into an intermediate-frequency or radio-frequency OFDM signal.

Japanese patent application publication number 8-102766 discloses digital quadrature modulators in which an I-channel (in-phase channel) carrier is regarded as a repetitive data sequence of "1"→"0"→"-1"→"0", and a Q-channel (quadrature channel) carrier is regarded as a repetitive data sequence of "0"→"1"→"0"→"-1". A digital I-channel information signal is sequentially multiplied by the I-channel carrier data sequence, while a digital Q-channel information signal is sequentially multiplied by the Q-channel carrier data sequence. A signal generated by the multiplication in the I-channel and a signal generated by the multiplication in the Q channel are multiplexed into a digital-quadrature-modulation result signal.

In the case where samples of the digital I-channel information signal and samples of the digital Q-channel information signal are synchronized with each other, the 90-degree (π/2) phase difference between the I-channel and Q-channel carrier data sequences causes a timing phase difference between the I-channel components and the Q-channel components of the digital-quadrature-modulation result signal. Such a timing phase difference adversely affects signal transmission.

Japanese application 8-102766 discloses that digital filters are provided respectively in I-channel and Q-channel signal flow paths before a stage for multiplexing the digital I-channel and Q-channel information signals by the I-channel and Q-channel carrier data sequences. The I-channel and Q-channel digital filters are designed to provide different signal phases to compensate for the timing phase difference between the I-channel components and the Q-channel components of the digital-quadrature-modulation result signal.

The I-channel and Q-channel digital filters in Japanese application 8-102766 are required to implement accurate operation. In addition, the I-channel and Q-channel digital filters have complicated structures, and are hence expensive.

Generally, it is difficult to sufficiently flatten the amplitude-frequency responses of the I-channel and Q-channel digital filters in Japanese application 8-102766 which are designed to provide sufficient compensation for the timing phase difference. The non-flat amplitude-frequency responses of the I-channel and Q-channel digital filters cause a reduction in accuracy and reliability of the digital-quadrature-modulation result signal.

### SUMMARY OF THE INVENTION

It is a first object of this invention to provide an improved method of generating an OFDM signal.

It is a second object of this invention to provide an improved apparatus for generating an OFDM signal.

A first aspect of this invention provides a method of generating an OFDM signal. The method comprises the steps of assigning every segment of an input information signal to one of first signal points in a complex plane in response to a state of the segment, and generating first signal-point information representing the assignment of the segment to one of the first signal points; generating second signal-point information in response to the first signal-point information, wherein the first signal-point information and the second signal-point information are symmetrical with respect to a predetermined frequency having a relation of a predetermined integer ratio with an IDFT sampling frequency to cancel and nullify one of a real-part IDFT-resultant signal and an imaginary-part IDFT-resultant signal; and implementing IDFT in response to the first signal-point information and the second signal-point information to generate an IDFT-resultant OFDM signal having only one of a real-part component and an imaginary-part component.

A second aspect of this invention provides an apparatus for generating an OFDM signal. The apparatus comprises first means for assigning every segment of an input information signal to one of first signal points in a complex plane in response to a state of the segment, and generating first signal-point information representing the assignment of the segment to one of the first signal points; second means for generating second signal-point information in response to the first signal-point information generated by the first means, wherein the first signal-point information and the second signal-point information are symmetrical with respect to a predetermined frequency having a relation of a predetermined integer ratio with an IDFT sampling frequency to cancel and nullify one of a real-part IDFT-resultant signal and an imaginary-part IDFT-resultant signal; and third means for implementing IDFT in response to the first signal-point information generated by the first means and the second signal-point information generated by the second means to generate an IDFT-resultant OFDM signal having only one of a real-part component and an imaginary-part component.

### BRIEF DESCRIPTION OF THE DRAWINGS

Fig. 1 is a block diagram of an OFDM-signal generation apparatus according to a first embodiment of this invention.
Fig. 2 is a diagram of QPSK-corresponding signal points in a complex plane.
Fig. 3 is a frequency-domain diagram of a signal at a frequency equal to 4-fold an IFFT basic frequency, and a signal at a frequency equal to 124-fold the IFFT basic frequency.
Fig. 4 is a frequency-domain diagram of real-part signal values determined in response to a 2-bit signal segment of "00" and corresponding to 4-fold and 124-fold the basic frequency.
Fig. 5 is a time-domain diagram of an IFFT-resultant carrier generated in response to the real-part signal values in Fig. 4.
Fig. 6 is a frequency-domain diagram of imaginary-part signal values determined in response to a 2-bit signal segment of "00" and corresponding to 4-fold and 124-fold the basic frequency.
Fig. 7 is a time-domain diagram of an IFFT-resultant signal generated in response to the imaginary-part signal values in Fig. 6.
Fig. 8 is a frequency-domain diagram of real-part signal values determined in response to a 2-bit signal segment of "01" and corresponding to 4-fold and 124-fold the basic frequency.
Fig. 9 is a time-domain diagram of an IFFT-resultant carrier generated in response to the real-part signal values in Fig. 8.
Fig. 10 is a frequency-domain diagram of imaginary-part signal values determined in response to a 2-bit signal segment of "01" and corresponding to 4-fold and 124-fold the basic frequency.
Fig. 11 is a time-domain diagram of an IFFT-resultant signal generated in response to the imaginary-part signal values in Fig. 10.
Fig. 12 is a frequency-domain diagram of real-part signal values determined in response to a 2-bit signal segment of "10" and corresponding to 4-fold and 124-fold the basic frequency.
Fig. 13 is a time-domain diagram of an IFFT-resultant carrier generated in response to the real-part signal values in Fig. 12.
Fig. 14 is a frequency-domain diagram of imaginary-part signal values determined in response to a 2-bit signal segment of "10" and corresponding to 4-fold and 124-fold the basic frequency.
Fig. 15 is a time-domain diagram of an IFFT-resultant signal generated in response to the imaginary-part signal values in Fig. 14.
Fig. 16 is a frequency-domain diagram of real-part signal values determined in response to a 2-bit signal segment of "11" and corresponding to 4-fold and 124-fold the basic frequency.
Fig. 17 is a time-domain diagram of an IFFT-resultant carrier generated in response to the real-part signal values in Fig. 16.
Fig. 18 is a frequency-domain diagram of imaginary-part signal values determined in response to a 2-bit signal segment of "11" and corresponding to 4-fold and 124-fold the basic frequency.
Fig. 19 is a time-domain diagram of an IFFT-resultant signal generated in response to the imaginary-part signal values in Fig. 18.
Fig. 20 is a frequency-domain diagram of an example of signal levels at different frequency points which correspond to real-part signal values generated by a QAM mapping circuit in Fig. 1.
Fig. 21 is a frequency-domain diagram of an example of signal levels at different frequency points which correspond to imaginary-part signal values generated by the QAM mapping circuit in Fig. 1.
Fig. 22 is a frequency-domain diagram of an example of signal levels at different frequency points which correspond to real-part signal values generated by a multi-carrier signal point generation circuit in Fig. 1.
Fig. 23 is a frequency-domain diagram of an example of signal levels at different frequency points which correspond to imaginary-part signal values generated by the multi-carrier signal point generation circuit in Fig. 1.
Fig. 24 is a block diagram of an OFDM-signal generation apparatus according to a second embodiment of this invention.

### DETAILED DESCRIPTION OF THE INVENTION

### First Embodiment

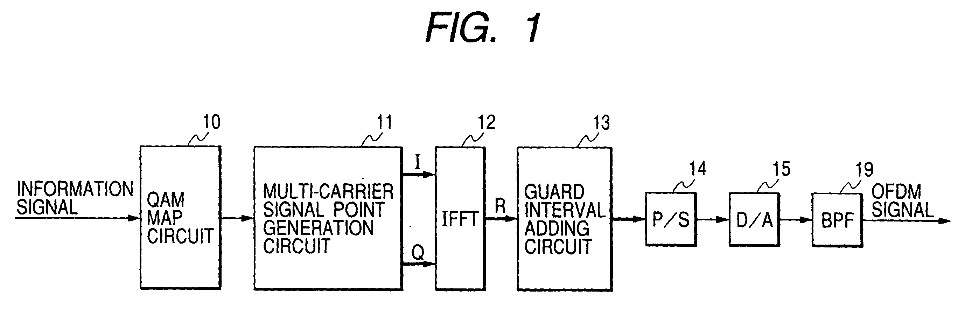

Fig. 1 shows an OFDM-signal (orthogonal frequency division multiplexed signal) generation apparatus according to a first embodiment of this invention.

The apparatus of Fig. 1 includes a QAM (quadrature amplitude modulation) mapping circuit 10, a multi-carrier signal point generation circuit 11, an IFFT (inverse fast Fourier transform) circuit 12, a guard-interval adding circuit 13, a parallel-to-serial (P/S) converter 14, a digital-to-analog (D/A) converter 15, and a band pass filter (BPF) 19. The QAM mapping circuit 10, the multi-carrier signal point generation circuit 11, the IFFT circuit 12, the guard-interval adding circuit 13, the P/S converter 14, the D/A converter 15, and the band pass filter 19 are sequentially connected in that order.

A digital information signal (an input digital information signal) to be transmitted is fed to the QAM mapping circuit 10. The digital information signal includes, for example, a digital video signal of an MPEG2 (Moving Picture Experts Group 2) format. The QAM mapping circuit 10 divides the digital information signal into successive segments. The QAM mapping circuit 10 assigns each of the segments of the digital information signal to one of predetermined QAM-corresponding signal points in response to the logic state of the segment. The QAM-corresponding signal points are located in a complex plane defined by a real axis and an imaginary axis. The QAM mapping circuit 10 informs the multi-carrier signal point generation circuit 11 of a sequence of QAM-corresponding signal points to which the segments of the digital information signal are assigned respectively.

The multi-carrier signal point generation circuit 11 uses the QAM-corresponding signal points notified by the QAM mapping circuit 10 as original QAM-corresponding signal points. The multi-carrier signal point generation circuit 11 generates counterbalance QAM-corresponding signal points in response to the original QAM-corresponding signal points according to a predetermined rule using symmetry and anti-symmetry. The multi-carrier signal point generation circuit 11 combines the original QAM-corresponding signal points and the counterbalance QAM-corresponding signal points into final QAM-corresponding signal points. The multi-carrier signal point generation circuit 11 cyclically assigns the final QAM-corresponding signal points to multi-carriers of an OFDM signal, respectively. The multi-carrier signal point generation circuit 11 generates digital I (in-phase) signals and digital Q (quadrature) signals in response to the final QAM-corresponding signal points and the assignment thereof to the multi-carriers of the OFDM signal. The digital I signals and the digital Q signals represent signal points selected from among the signals points of the multi-carriers. The multi-carrier signal point generation circuit 11 feeds the digital I signals and the digital Q signals to the IFFT circuit 12.

For every symbol, the IFFT circuit 12 implements N-point IFFT (inverse fast Fourier transform), that is, N-point IDFT (inverse discrete Fourier transform) while setting the digital I signals as real-part terms and setting the digital Q signals as imaginary-part terms. Here "N" denotes an IFFT order number or an IDFT point number equal to 128. The IFFT circuit 12 converts the digital I signals into IFFT-resultant digital I signals or IFFT-resultant digital real-part signals. The IFFT circuit 12 feeds the IFFT-resultant digital real-part signals to the guard-interval adding circuit 13. During the IFFT by the IFFT circuit 12, signals corresponding to IFFT-resultant digital imaginary-part signals (IFFT-resultant digital Q signals) are canceled. The cancel is caused by the counterbalance QAM-corresponding signal points added by the multi-carrier signal point generation circuit 11. Accordingly, IFFT-resultant digital imaginary-part signals are absent from effective signals outputted by the IFFT circuit 12.

For example, the combination of the QAM mapping circuit 10, the multi-carrier signal point generation circuit 11, and the IFFT circuit 12 is designed so that pieces of information to be transmitted will be assigned to the non-canceled IFFT-resultant digital real-part signals while predetermined dummy information pieces will be assigned to the canceled IFFT-resultant digital imaginary-part signals.

The guard-interval adding circuit 13 copies rear portions of 1-symbol corresponding segments of the respective IFFT-resultant digital real-part signals, and adds the copied portions to the fronts of the 1-symbol corresponding segments of the IFFT-resultant digital real-part signals as guard-interval signal portions respectively. The guard-interval adding circuit 13 outputs the resultant signals to the P/S converter 14 as guard-interval added signals.

For every symbol, the P/S converter 14 combines the output signals of the guard-interval adding circuit 13 into a serial-format digital signal. The P/S converter 14 outputs the serial-format digital signal to the D/A converter 15.

The D/A converter 15 changes the digital output signal of the P/S converter 14 into a corresponding analog baseband OFDM signal. The D/A converter 15 outputs the analog baseband OFDM signal to the band pass filter 19.

The band pass filter 19 implements filtering and passes only components of the analog baseband OFDM signal which are in a desired frequency band. The band pass filter 19 outputs the filtering-resultant baseband OFDM signal to a next stage. For example, the next stage includes a frequency converter for changing the filtering-resultant baseband OFDM signal into a corresponding radio-frequency OFDM signal, a power amplifier for amplifying the radio-frequency OFDM signal, and an antenna for radiating the amplification-resultant radio-frequency OFDM signal.

It is well-known in the art that 4-value QAM is equivalent to QPSK (quadrature phase shift keying). Accordingly, 4-value QAM is also referred to as QPSK.

As previously mentioned, the QAM mapping circuit 10 assigns each of the segments of the digital information signal to one of predetermined QAM-corresponding signal points in response to the logic state of the segment. The QAM-corresponding signal points mean QPSK-corresponding signal points located in a complex plane defined by a real axis and an imaginary axis.

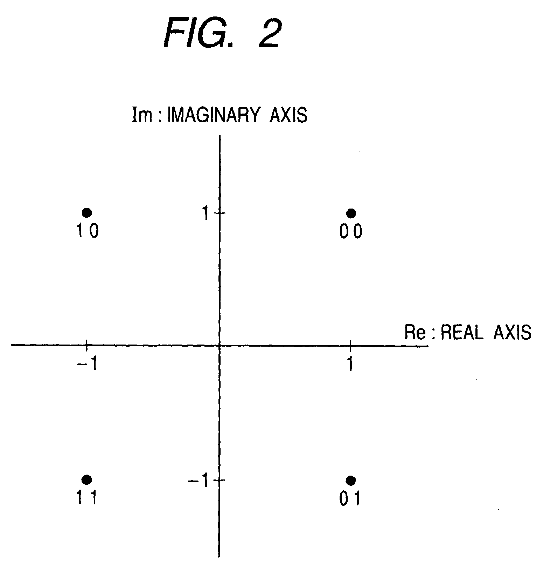

As shown in Fig. 2, there are four different QPSK-corresponding signal points in a complex plane defined by a real axis and an imaginary axis. A 2-bit signal segment of "00", a 2-bit signal segment of "01", a 2-bit signal segment of "10", and a 2-bit signal segment of "11" are assigned to the four signal points respectively. The assignment of a 2-bit signal segment to one of the signal points means the assignment of the 2-bit signal segment to a pair of real-part and imaginary-part signal values. Specifically, a 2-bit signal segment of "00" is assigned to a real-part signal value of "+1" and an imaginary-part signal value of "+1". A 2-bit signal segment of "01" is assigned to a real-part signal value of "+1" and an imaginary-part signal value of "-1". A 2-bit signal segment of "10" is assigned to a real-part signal value of "-1" and an imaginary-part signal value of "+1". A 2-bit signal segment of "11" is assigned to a real-part signal value of "-1" and an imaginary-part signal value of "-1".

The QAM mapping circuit 10 divides the digital information signal into successive 2-bit segments. The QAM mapping circuit 10 assigns each of the 2-bit segments of the digital information signal to one of the four QPSK-corresponding signal points in response to the logic state of the segment. Thus, the QAM mapping circuit 10 converts each of the 2-bit segments of the digital information signal into a corresponding pair of real-part and imaginary-part signal values in response to the logic state of the segment. The QAM mapping circuit 10 informs the multi-carrier signal point generation circuit 11 of a sequence of resultant pairs of real-part and imaginary-part signal values, that is, a sequence of QPSK-corresponding signal points to which the 2-bit segments of the digital information signal are assigned respectively.

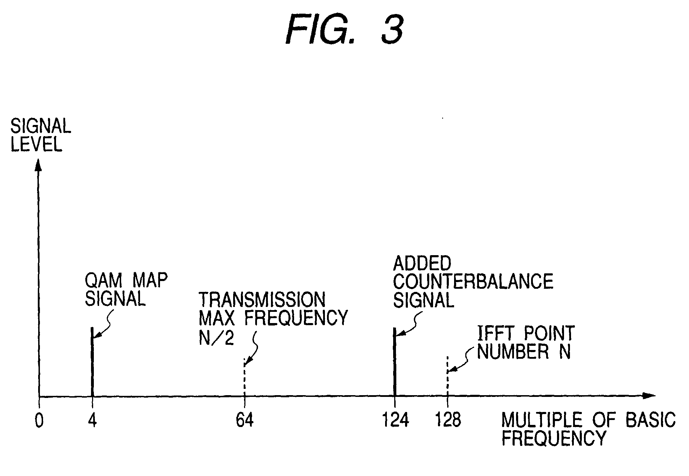

Fig. 3 shows the relation between signal levels and multiples of a basic frequency of the IFFT implemented by the IFFT circuit 12. As previously mentioned, the order number (point number) "N" of the IFFT is equal to 128. In this case, the value "N/2" which corresponds to the Nyquist frequency is equal to 64. The IFFT can generate 63 carriers having frequencies equal to multiples of the basic frequency, specifically, 1-fold to 63-fold the basic frequency, respectively.

For every symbol, the QAM mapping circuit 10 feeds the multi-carrier signal point generation circuit 11 with 63 original pairs of real-part and imaginary-part signal values which correspond to the above-mentioned 63 carriers respectively. As previously mentioned, the 63 carriers have frequencies equal to 1-fold to 63-fold the basic frequency, respectively. The multi-carrier signal point generation circuit 11 generates 63 counterbalance pairs of real-part and imaginary-part signal values in response to the 63 original pairs fed from the QAM mapping circuit 10. The 63 counterbalance pairs correspond to 63 carriers which have frequencies equal to 65-fold to 127-fold the basic frequency respectively in a virtual frequency domain. The 63 carriers corresponding to the 63 counterbalance pairs are negative with respect to the 63 carriers corresponding to the 63 original pairs in an actual IFFT-resultant frequency domain. The multi-carrier signal point generation circuit 11 adds the 63 counterbalance pairs to the 63 original pairs. Thereby, the multi-carrier signal point generation circuit 11 combines the 63 counterbalance pairs and the 63 original pairs into 126 pairs corresponding to positive versions and negative versions of 63 carriers.

Specifically, in response to each original pair corresponding to a carrier having a frequency equal to K-fold the basic frequency, the multi-carrier signal point generation circuit 11 generates a counterbalance pair corresponding to a carrier having a frequency equal to (128-K)-fold the basic frequency in a virtual frequency domain. In an actual IFFT-resultant frequency domain, the carrier having the frequency equal to (128-K)-fold the basic frequency is a negative version of the carrier having the frequency equal to K-fold the basic frequency. For example, in response to an original pair corresponding to a carrier having a frequency equal to 4-fold the basic frequency, the multi-carrier signal point generation circuit 11 generates a counterbalance pair corresponding to a carrier having a frequency equal to 124-fold the basic frequency (see Fig. 3). Signal values in each counterbalance pair have the following relation with signal values in the corresponding original pair. A real-part signal value RVc in each counterbalance pair is equal to a real-part signal value RVo in the corresponding original pair. In other words, RVc = RVo. An imaginary-part signal value IVc in each counterbalance pair is equal to the sign inversion of an imaginary-part signal value IVo in the corresponding original pair. In other words, IVc = -IVo. Therefore, regarding real-part signal values, OFDM multi-carrier signal points in the lower side of the Nyquist frequency (N/2) and OFDM multi-carrier signal points in the upper side of the Nyquist frequency (N/2) are mirror-symmetrical (even-symmetrical) with respect to the frequency point "N/2". On the other hand, regarding imaginary-part signal values, OFDM multi-carrier signal points in the lower side of the Nyquist frequency (N/2) and OFDM multi-carrier signal points in the upper side of the Nyquist frequency (N/2) are anti-symmetrical (odd-symmetrical or point-symmetrical) with respect to the frequency point "N/2".

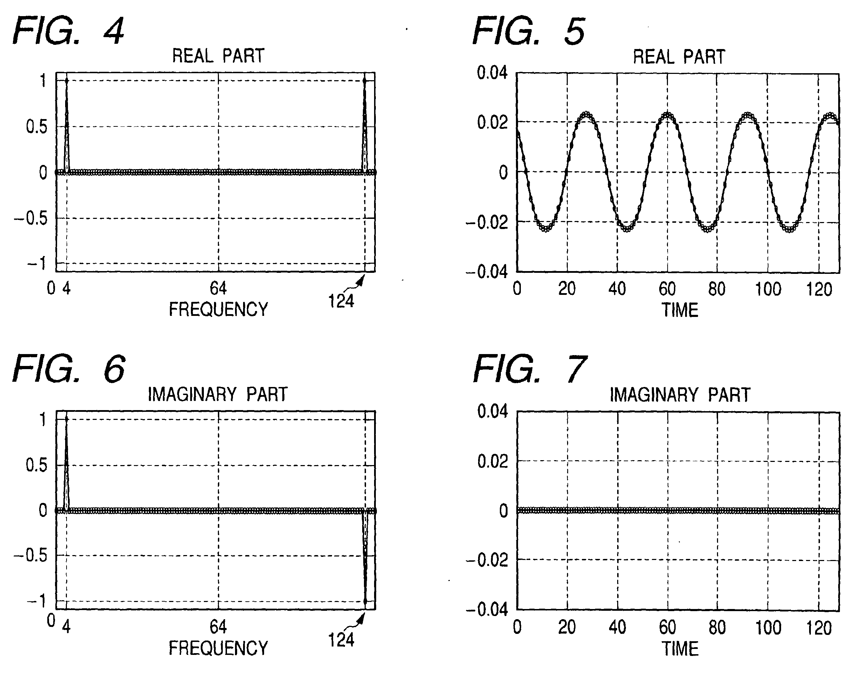

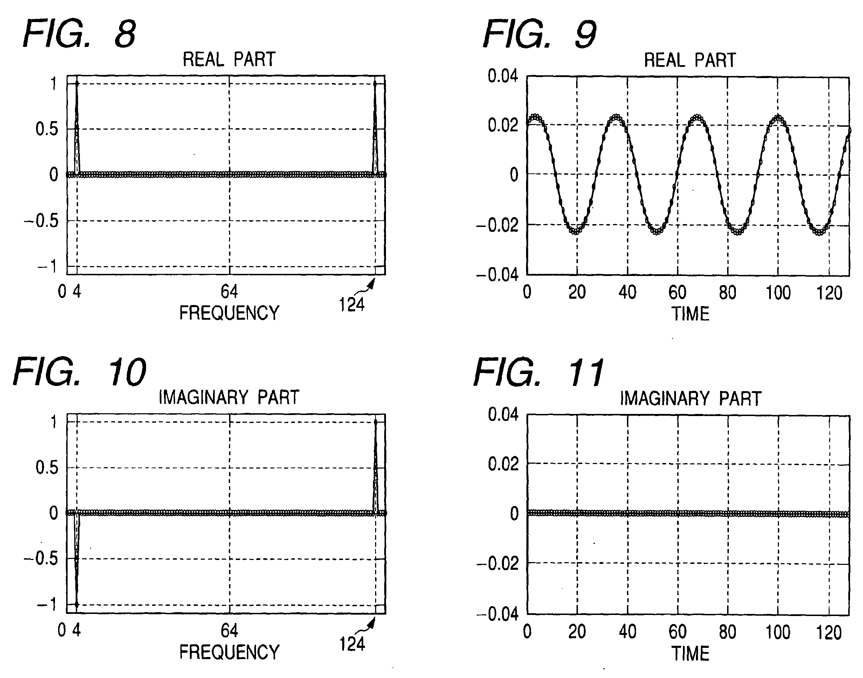

A further description is given below while an original pair of real-part and imaginary-part signal values which corresponds to a carrier having a frequency equal to 4-fold the basic frequency is taken as an example. As previously mentioned, a carrier having a frequency equal to 124-fold the basic frequency is used as a counterbalance for the carrier having the frequency equal to 4-fold the basic frequency. In an original pair corresponding to a 2-bit signal segment of "00", both the real-part signal value and the imaginary-part signal value are equal to "+1". In a counterbalance pair for the original pair, the real-part signal value and the imaginary-part signal value are equal to "+1" and "-1", respectively. Thus, as shown in Fig. 4, regarding real-part signal values, both the original pair corresponding to 4-fold the basic frequency and the counterbalance pair corresponding to 124-fold the basic frequency are equal to "+1" in signal level. As shown in Fig. 5, a carrier generated by the IFFT in response to the real-part signal values in the original pair and the counterbalance pair has 4 cycles with a predetermined phase advance for the present symbol. On the other hand, as shown in Fig. 6, regarding imaginary-part signal values, the original pair corresponding to 4-fold the basic frequency and the counterbalance pair corresponding to 124-fold the basic frequency are equal to "+1" and "-1" in signal level, respectively. Therefore, the imaginary-part signal values in the original pair and the counterbalance pair cancel each other during the IFFT. Thus, as shown in Fig. 7, a carrier generated by the IFFT in response to the imaginary-part signal values in the original pair and the counterbalance pair remains null.

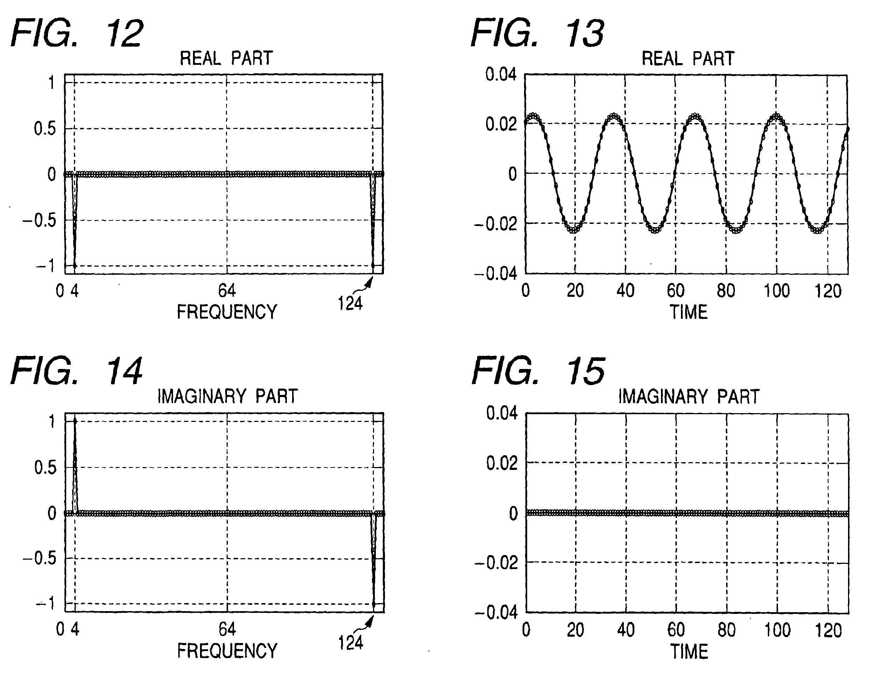

In an original pair corresponding to a 2-bit signal segment of "01", the real-part signal value and the imaginary-part signal value are equal to "+1" and "-1", respectively. In a counterbalance pair for the original pair, both the real-part signal value and the imaginary-part signal value are equal to "+1". Thus, as shown in Fig. 8, regarding real-part signal values, both the original pair corresponding to 4-fold the basic frequency and the counterbalance pair corresponding to 124-fold the basic frequency are equal to "+1" in signal level. As shown in Fig. 9, a carrier generated by the IFFT in response to the real-part signal values in the original pair and the counterbalance pair has 4 cycles with a predetermined phase advance for the present symbol. On the other hand, as shown in Fig. 10, regarding imaginary-part signal values, the original pair corresponding to 4-fold the basic frequency and the counterbalance pair corresponding to 124-fold the basic frequency are equal to "-1" and "+1" in signal level, respectively. Therefore, the imaginary-part signal values in the original pair and the counterbalance pair cancel each other during the IFFT. Thus, as shown in Fig. 11, a carrier generated by the IFFT in response to the imaginary-part signal values in the original pair and the counterbalance pair remains null.

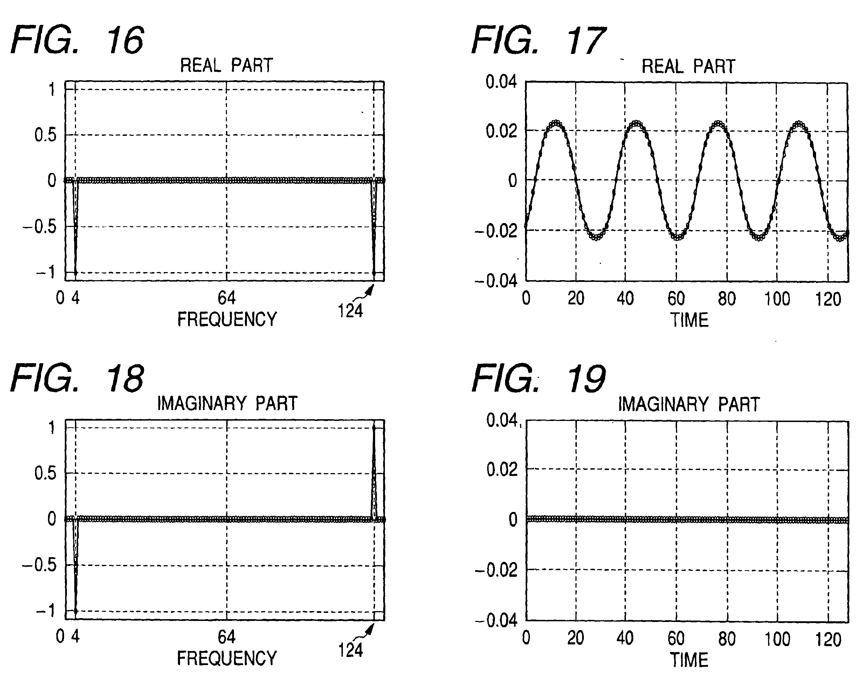

In an original pair corresponding to a 2-bit signal segment of "10", the real-part signal value and the imaginary-part signal value are equal to "-1" and "+1", respectively. In a counterbalance pair for the original pair, both the real-part signal value and the imaginary-part signal value are equal to "-1". Thus, as shown in Fig. 12, regarding real-part signal values, both the original pair corresponding to 4-fold the basic frequency and the counterbalance pair corresponding to 124-fold the basic frequency are equal to "-1" in signal level. As shown in Fig. 13, a carrier generated by the IFFT in response to the real-part signal values in the original pair and the counterbalance pair has 4 cycles with a predetermined phase advance for the present symbol. On the other hand, as shown in Fig. 14, regarding imaginary-part signal values, the original pair corresponding to 4-fold the basic frequency and the counterbalance pair corresponding to 124-fold the basic frequency are equal to "+1" and "-1" in signal level, respectively. Therefore, the imaginary-part signal values in the original pair and the counterbalance pair cancel each other during the IFFT. Thus, as shown in Fig. 15, a carrier generated by the IFFT in response to the imaginary-part signal values in the original pair and the counterbalance pair remains null.

In an original pair corresponding to a 2-bit signal segment of "11", both the real-part signal value and the imaginary-part signal value are equal to "-1". In a counterbalance pair for the original pair, the real-part signal value and the imaginary-part signal value are equal to "-1" and "+1", respectively. Thus, as shown in Fig. 16, regarding real-part signal values, both the original pair corresponding to 4-fold the basic frequency and the counterbalance pair corresponding to 124-fold the basic frequency are equal to "-1" in signal level. As shown in Fig. 17, a carrier generated by the IFFT in response to the real-part signal values in the original pair and the counterbalance pair has 4 cycles with a predetermined phase advance for the present symbol. On the other hand, as shown in Fig. 18, regarding imaginary-part signal values, the original pair corresponding to 4-fold the basic frequency and the counterbalance pair corresponding to 124-fold the basic frequency are equal to "-1" and "+1" in signal level, respectively. Therefore, the imaginary-part signal values in the original pair and the counterbalance pair cancel each other during the IFFT. Thus, as shown in Fig. 19, a carrier generated by the IFFT in response to the imaginary-part signal values in the original pair and the counterbalance pair remains null.

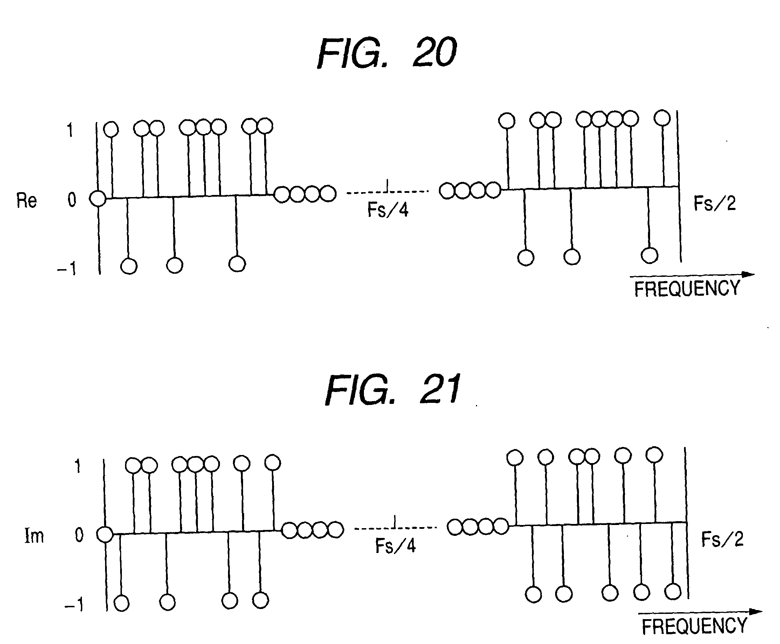

Fig. 20 shows an example of signal levels at frequency points arranged along the abscissa which correspond to real-part signal values generated by the QAM mapping circuit 10. Fig. 21 shows an example of signal levels at frequency points arranged along the abscissa which correspond to imaginary-part signal values generated by the QAM mapping circuit 10. The frequency points corresponding to the real-part and imaginary-part signal values generated by the QAM mapping circuit 10 are arranged in the band from the frequency "O" to the frequency "Fs/2", where "Fs" denotes the sampling frequency at which the IFFT circuit 12 is driven. For example, the frequency spectrum in the band from the frequency "0" to the frequency "Fs/4" and the frequency spectrum in the band from the frequency "Fs/2" to the frequency "Fs/4" along the reverse order are in the following relation. Specifically, the negative frequency spectrum with respect to the frequency spectrum in the band from the frequency "0" to the frequency "Fs/4" is formed by signal levels at frequency points arranged in the band from the frequency "Fs/2" to the frequency "Fs/4" along the reverse order.

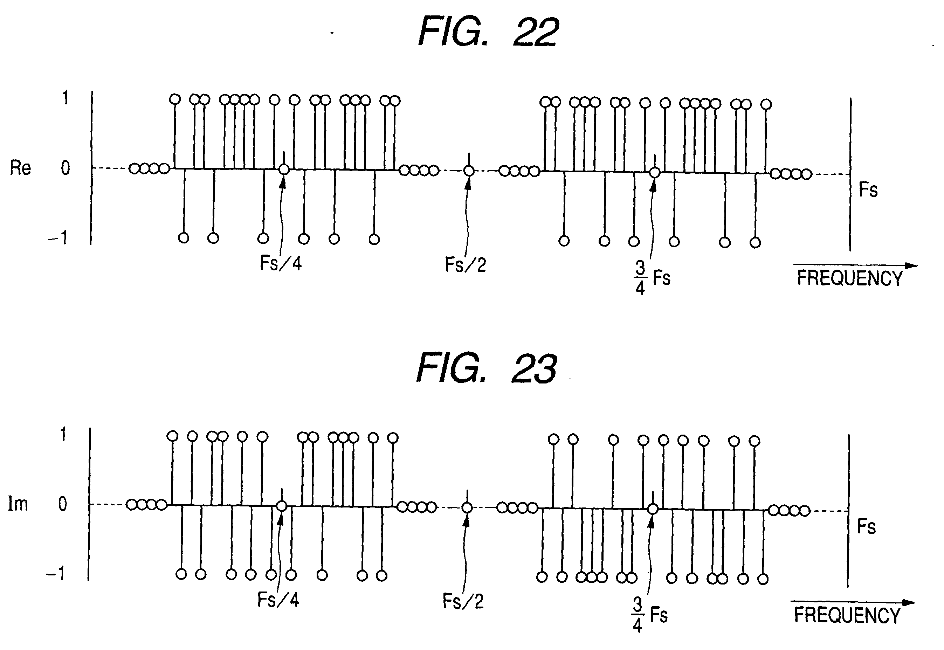

Fig. 22 shows an example of signal levels at frequency points arranged along the abscissa which correspond to real-part signal values generated by the multi-carrier signal point generation circuit 11. As shown in Fig. 22, the frequency points are separated into a first group centered at the frequency "Fs/4" and a second group centered at the frequency "3Fs/4". The frequency points in the first group correspond to original ones while the frequency points in the second group correspond to counterbalance ones. A set of the signal levels at the frequency points in the first group and a set of the signal levels at the frequency points in the second group are mirror-symmetrical (even-symmetrical) with respect to the frequency "Fs/2" or the frequency having the ratio of a first predetermined integer to a second predetermined integer with respect to the sampling frequency "Fs". In the actual frequency domain related to the signals resulting from the IFFT by the IFFT circuit 12, the frequency points in the second group are coincident with the corresponding frequency points in the first group. The signal levels at the frequency points in the first group are equal to the signal levels at the corresponding frequency points in the second group. Accordingly, an effective frequency spectrum such as shown in Fig. 20 is available.

Fig. 23 shows an example of signal levels at frequency points arranged along the abscissa which correspond to imaginary-part signal values generated by the multi-carrier signal point generation circuit 11. As shown in Fig. 23, the frequency points are separated into a first group centered at the frequency "Fs/4" and a second group centered at the frequency "3Fs/4". The frequency points in the first group correspond to original ones while the frequency points in the second group correspond to counterbalance ones. A set of the signal levels at the frequency points in the first group and a set of the signal levels at the frequency points in the second group are anti-symmetrical (odd-symmetrical or point-symmetrical) with respect to the frequency "Fs/2" or the frequency having the ratio of a first predetermined integer to a second predetermined integer with respect to the sampling frequency "Fs". In the actual frequency domain related to the signals resulting from the IFFT by the IFFT circuit 12, the frequency points in the second group are coincident with the corresponding frequency points in the first group. The signal levels at the frequency points in the first group are opposite to the signal levels at the corresponding frequency points in the second group. Therefore, during the IFFT, signals corresponding to the first group and signals corresponding to the second group cancel each other. Thus, an effective IFFT-resultant signal is unavailable.

The apparatus of Fig. 1 provides advantages as follows. The apparatus of Fig. 1 dispenses with a digital quadrature modulator. Accordingly, it is possible to prevent the occurrence of an I-Q timing phase difference which would be caused by a digital quadrature modulator. In addition, it is unnecessary to provide digital filters to compensate for the I-Q timing phase difference.

Preferably, the apparatus of Fig. 1 is formed by a DSP (digital signal processor) or a dedicated LSI.

### Second Embodiment

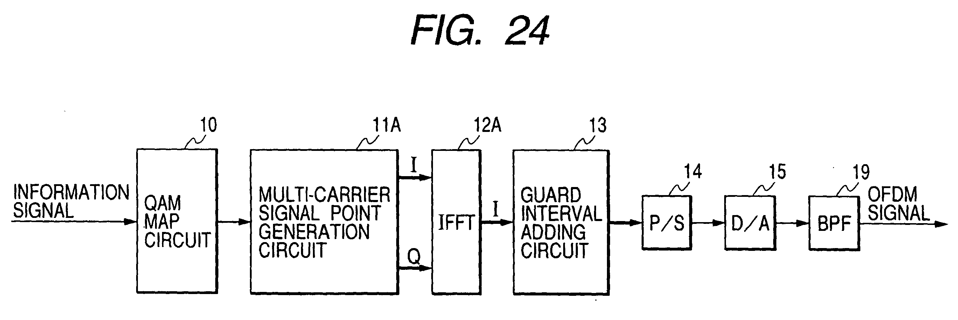

Fig. 24 shows an OFDM-signal generation apparatus according to a second embodiment of this invention. The apparatus of Fig. 24 is similar to the apparatus of Fig. 1 except that a multi-carrier signal point generation circuit 11A and an IFFT circuit 12A replace the multi-carrier signal point generation circuit 11 and the IFFT circuit 12 (see Fig. 1) respectively.

The multi-carrier signal point generation circuit 11A uses the QAM-corresponding signal points notified by the QAM mapping circuit 10 as original QAM-corresponding signal points. The multi-carrier signal point generation circuit 11A generates counterbalance QAM-corresponding signal points in response to the original QAM-corresponding signal points according to a predetermined rule using symmetry and anti-symmetry. The multi-carrier signal point generation circuit 11A combines the original QAM-corresponding signal points and the counterbalance QAM-corresponding signal points into final QAM-corresponding signal points. The multi-carrier signal point generation circuit 11A cyclically assigns the final QAM-corresponding signal points to multi-carriers of an OFDM signal, respectively. The multi-carrier signal point generation circuit 11A generates digital I (in-phase) signals and digital Q (quadrature) signals in response to the final QAM-corresponding signal points and the assignment thereof to the multi-carriers of the OFDM signal. The digital I signals and the digital Q signals represent signal points selected from among the signals points of the multi-carriers. The multi-carrier signal point generation circuit 11A feeds the digital I signals and the digital Q signals to the IFFT circuit 12A.

For every symbol, the IFFT circuit 12A implements 128-point IFFT, that is, 128-point IDFT while setting the digital I signals as real-part terms and setting the digital Q signals as imaginary-part terms. The IFFT circuit 12A converts the digital Q signals into IFFT-resultant digital Q signals or IFFT-resultant digital imaginary-part signals. The IFFT circuit 12A feeds the IFFT-resultant digital imaginary-part signals to the guard-interval adding circuit 13. During the IFFT by the IFFT circuit 12A, signals corresponding to IFFT-resultant digital real-part signals (IFFT-resultant digital I signals) are canceled. The cancel is caused by the counterbalance QAM-corresponding signal points added by the multi-carrier signal point generation circuit 11A. Accordingly, IFFT-resultant digital real-part signals are absent from effective signals outputted by the IFFT circuit 12A.

The multi-carrier signal point generation circuit 11A will be described below in more detail. For every symbol, the QAM mapping circuit 10 feeds the multi-carrier signal point generation circuit 11A with 63 original pairs of real-part and imaginary-part signal values which correspond to the 63 carriers respectively. The 63 carriers have frequencies equal to 1-fold to 63-fold the basic frequency, respectively. The multi-carrier signal point generation circuit 11A generates 63 counterbalance pairs of real-part and imaginary-part signal values in response to the 63 original pairs fed from the QAM mapping circuit 10. The 63 counterbalance pairs correspond to 63 carriers which have frequencies equal to 65-fold to 127-fold the basic frequency respectively in a virtual frequency domain. The 63 carriers corresponding to the 63 counterbalance pairs are negative with respect to the 63 carriers corresponding to the 63 original pairs in an actual IFFT-resultant frequency domain. The multi-carrier signal point generation circuit 11A adds the 63 counterbalance pairs to the 63 original pairs. Thereby, the multi-carrier signal point generation circuit 11A combines the 63 counterbalance pairs and the 63 original pairs into 126 pairs corresponding to positive versions and negative versions of 63 carriers.

Specifically, in response to each original pair corresponding to a carrier having a frequency equal to K-fold the basic frequency, the multi-carrier signal point generation circuit 11A generates a counterbalance pair corresponding to a carrier having a frequency equal to (128-K)-fold the basic frequency in a virtual frequency domain. In an actual IFFT-resultant frequency domain, the carrier having the frequency equal to (128-K)-fold the basic frequency is a negative version of the carrier having the frequency equal to K-fold the basic frequency. Signal values in each counterbalance pair have the following relation with signal values in the corresponding original pair. A real-part signal value RVc in each counterbalance pair is equal to the sign inversion of a real-part signal value RVo in the corresponding original pair. In other words, RVc = -RVo. An imaginary-part signal value IVc in each counterbalance pair is equal to an imaginary-part signal value IVo in the corresponding original pair. In other words, IVc = IVo. Therefore, regarding real-part signal values, OFDM multi-carrier signal points in the lower side of the Nyquist frequency (N/2) and OFDM multi-carrier signal points in the upper side of the Nyquist frequency (N/2) are anti-symmetrical (odd-symmetrical or point-symmetrical). On the other hand, regarding imaginary-part signal values, OFDM multi-carrier signal points in the lower side of the Nyquist frequency (N/2) and OFDM multi-carrier signal points in the upper side of the Nyquist frequency (N/2) are mirror-symmetrical (even-symmetrical).

### Third Embodiment

A third embodiment of this invention is similar to the first or second embodiment thereof except for design changes mentioned below. In the third embodiment of this invention, an IFFT circuit is of an over-sampling type and operates at a relatively high sampling frequency. A specific frequency having a relation of a given integer ratio with the IFFT sampling frequency is determined at an upper limit of the band of IFFT-resultant carriers. The specific frequency is used as a center for symmetry and anti-symmetry.

### Fourth Embodiment

A fourth embodiment of this invention is similar to the first, second, or third embodiment thereof except that QPSK is replaced by BPSK (binary phase shift keying), 16QAM, 64QAM, or 256QAM.

## Claims

1. A method of generating an OFDM signal, comprising the steps of:
assigning every segment of an input information signal to one of first signal points in a complex plane in response to a state of the segment, and generating first signal-point information representing the assignment of the segment to one of the first signal points;
generating second signal-point information in response to the first signal-point information, wherein the first signal-point information and the second signal-point information are symmetrical with respect to a predetermined frequency having a relation of a predetermined integer ratio with an IDFT sampling frequency to cancel and nullify one of a real-part IDFT-resultant signal and an imaginary-part IDFT-resultant signal; and
implementing IDFT in response to the first signal-point information and the second signal-point information to generate an IDFT-resultant OFDM signal having only one of a real-part component and an imaginary-part component.

2. An apparatus for generating an OFDM signal, comprising:
first means for assigning every segment of an input information signal to one of first signal points in a complex plane in response to a state of the segment, and generating first signal-point information representing the assignment of the segment to one of the first signal points;
second means for generating second signal-point information in response to the first signal-point information generated by the first means, wherein the first signal-point information and the second signal-point information are symmetrical with respect to a predetermined frequency having a relation of a predetermined integer ratio with an IDFT sampling frequency to cancel and nullify one of a real-part IDFT-resultant signal and an imaginary-part IDFT-resultant signal; and
third means for implementing IDFT in response to the first signal-point information generated by the first means and the second signal-point information generated by the second means to generate an IDFT-resultant OFDM signal having only one of a real-part component and an imaginary-part component.
